Europäisches Patentamt

European Patent Office

Office européen des brevets

(11) Publication number: **0 464 601 A2**

# EUROPEAN PATENT APPLICATION

(21) Application number: **91110479.2**

(51) Int. Cl.5: **G06F 7/48**

(22) Date of filing: **25.06.91**

(30) Priority: **25.06.90 JP 165913/90**

(43) Date of publication of application:
**08.01.92 Bulletin 92/02**

(84) Designated Contracting States:
**DE FR GB**

(71) Applicant: **NEC CORPORATION**
**7-1, Shiba 5-chome Minato-ku**
**Tokyo 108-01(JP)**

(72) Inventor: **Matsuda, Nobuko, c/o NEC**
**Corporation**
**7-1, Shiba 5-chome**
**Minato-ku, Tokyo(JP)**

(74) Representative: **Betten & Resch**
**Reichenbachstrasse 19**
**W-8000 München 5(DE)**

(54) **Arithmetic operation system.**

(57) An arithmetic operation system includes a plurality of cascaded arithmetic units each receiving operation data and an input carry and outputting an operation result data and an output carry. A carry control indication register is provided for storing carry control information for each of the plurality of cascaded arithmetic units. A carry controller is provided for each of the cascaded arithmetic units so as to receive a corresponding carry control bit from the carry control indication register. The carry controller operates to modify an output carry outputted from the corresponding arithmetic unit on the basis of the received catty control bit, so as to supply the modified carry to an adjacent more significant bit arithmetic unit.

FIGURE 1

## Background of the Invention

### Field of the invention

The present invention relates to an arithmetic operation system, and more specifically to an arithmetic operation system for processing image data in an image processing system.

### Description of related art

In display apparatuses used in an image processing field, it has become possible to display a multi-color image by allocating a plurality of bits in a display memory for each one pixel on a display screen. For example, by changing respective brightness of three color primaries of red, green and blue, it is possible to indicate any color. For this purpose, in an image display system in which a plurality of bits are allocated for each one pixel, it is an ordinary practice to divide "n" bits for each one bit into three fields, so that the three fields are used for the brightness of the red, the brightness of the green and the brightness of the blue, respectively.

When a graphic pattern is depicted in the above mentioned image display system, an arithmetic and logic operation is executed between a value for a pixel to be written and a value of a corresponding pixel already existing in the display memory, and a result of the arithmetic operation is finally written back to the display memory. This arithmetic and logic operation can be divided into a logic operation and an arithmetic operation. If the logic operation is executed, no problem occurs, but if the arithmetic operation is executed, a problem has been encountered. Namely, if the arithmetic operation is executed for all the "n" bits for one pixel as they are, a carry beyond each field will often occur dependently upon the values to be subjected to the arithmetic operation. As a result, for example, the result of the red field gives influence to the green field, and the result of the green field gives influence to the blue field.

In a graphic system having a 32-bit arithmetic operation apparatus, if 16 bits are assigned to each one pixel, information for two pixels is subjected to the arithmetic operation as a whole. In this case, if an ordinary 32-bit arithmetic operation is executed, a result of arithmetic operation for the pixel corresponding to low place 16 bits will often give influence to the pixel corresponding to high place 16 bits.

In order to prevent the result of arithmetic operation for each field from giving influence to an adjacent field, it is necessary to stop the carry at a field boundary. In conventional graphic systems, this carry stop processing has been performed at fixed positions within "n" bits. For example, the 16 bits allocated for each one pixel is divided into three fields of respective fixed bit numbers, such as 6 bits, 6 bits and 4 bits. In this case, 16 arithmetic one-bit units are cascaded for processing the 16-bit data in such a manner that a carry outputted from each arithmetic unit is supplied to an adjacent high place arithmetic unit. In addition, a gate is located between a fourth and fifth arithmetic units and another gate is located between a tenth and eleventh arithmetic units. In a mode in which the 16 bits are not divided into three fields, the two gates are opened, so that a carry outputted from each arithmetic unit is without exception supplied to an adjacent high place arithmetic unit, so that each arithmetic unit executes an arithmetic operation on the basis of the received data and the received carry. On the other hand, in another mode in which the 16 bits are divided into three fields, the two gates are closed, so that a carry outputted from each of fourth and tenth arithmetic units is blocked, and each of the fifth and eleventh arithmetic units receives "0" as the carry input without exception. As a result, the three divided fields can have the result of arithmetic operation independently of each other.

However, the number of bits allocated to each one pixel is various, for example, 4, 8, 16, 24, and 32. In addition, the way of dividing the "n" bits allocated for each one pixel, into three fields of red, green and blue, is not fixed to one. For example, in some case, many bits are allocated to the red field in order to make the steps of brightness of red finer than green and blue. In another case, the "n" bits allocated for each one pixel are divided into four or more fields, three of which are used for three colors, and the other(s) is used for another object. For example, the 16 bits for each one pixel are divided into 15 bits and one bit, the 15 bits being used for a graphic display, and the one bit being used for a textual or character display. In addition, the 15 bits are divided into the three fields for the three colors, so that the color graphic display is constituted in a manner of 5 bits × 3. In still another case, one or a plurality bits are used for a cursor display, and the remaining bits are used for ordinary graphic display.

As mentioned hereinbefore, the conventional system has been such that the carry is stopped at the fixed position. Because of this, even if it is desired to divide the bits at an arbitrary position, it was not possible to do so. Under this circumstance, the bit division had to comply with the bit allocation previously determined in the graphic system.

From another viewpoint, in order to minimize the scale of the system, it is desired to use the same arithmetic operation apparatus not only for the processing of the image data but also for data having a structure different from that of the image data, exemplified by coordinate data includes X-coordinate data of 16 bits and Y-coordinate data of 16 bits. In the conventional system in which the carry is stopped at the fixed position, however, it is not possible to change the number of bits of each field in the arithmetic operation apparatus. Because of this, an arithmetic operation apparatus had to be provided independently for each of the purposes.

Summary of the Invention

Accordingly, it is an object of the present invention to provide an arithmetic operation system which has overcome the above mentioned defect of the conventional one.

Another object of the present invention is to provide an arithmetic operation system capable of having a plurality of fields partitioned at an arbitrary position.

The above and other objects of the present invention are achieved in accordance with the present invention by an arithmetic operation system which includes a plurality of cascaded arithmetic units each receiving operation data and an input carry and outputting an operation result data and an output carry, comprising a carry control indication register for storing carry control information for each of the plurality of cascaded arithmetic units, and a plurality of carry controllers each provided for a corresponding one of the plurality of cascaded arithmetic units, the carry controller receiving corresponding carry control information from the carry control indication register and operating to modify an output carry outputted from the corresponding arithmetic unit so as to supply the modified carry to an adjacent more significant bit arithmetic unit.

The above and other objects, features and advantages of the present invention will be apparent from the following description of preferred embodiments of the invention with reference to the accompanying drawings.

Brief Description of the Drawings

Figure 1 is a block diagram of a first embodiment of the arithmetic operation system in accordance with the present invention;
Figure 2A illustrates an example of graphic image in the case of transferring image data within a rectangular area in the first embodiment;
Figure 2B illustrates correspondence between an operand and values of the carry control indication register in the first embodiment;
Figure 3 is a partial circuit diagram of the arithmetic operation system used in the first embodiment;
Figure 4 is a block diagram of a second embodiment of the arithmetic operation system in accordance with the present invention; and
Figures 5A and 5B illustrate examples of operands in the second embodiment.

Description of the Preferred embodiments

A first embodiment of the present invention will be described with the accompanying drawings. The first embodiment is an example in which the arithmetic operation system in accordance with the present invention is applied to the case of transferring image data within a rectangular area in a graphic system.

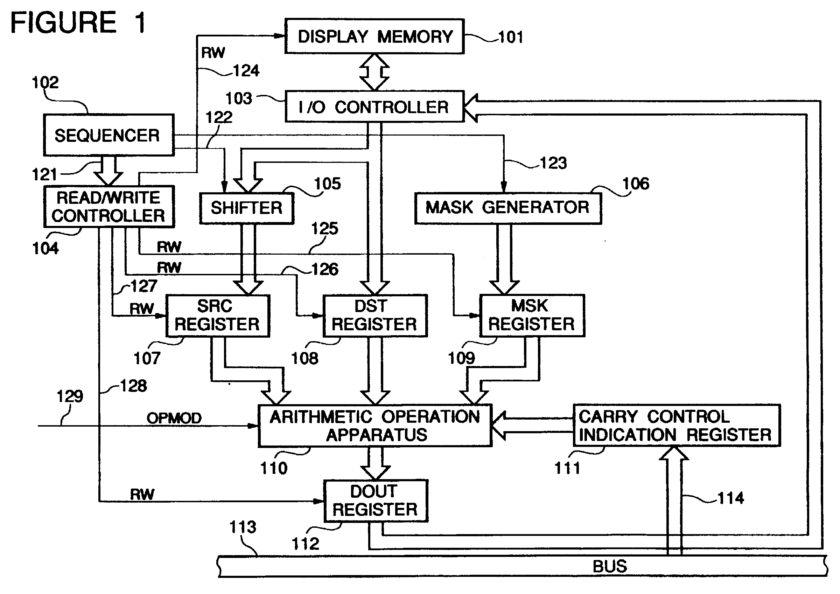

Referring to Figure 1, there is shown a block diagram of a first embodiment of the arithmetic operation system in accordance with the present invention. The shown arithmetic operation system includes an display memory 101, a sequencer 102, an I/O (input/output) controller 103, a read/write controller 104, a shifter 105 coupled to the I/O controller 103 so as to receive a transfer source data and for shifting the received transfer source data in the case of a rectangular area transfer, and a mask generator 106 for generating a mask which is used to control a portion to be rewritten and a portion not to be rewritten in the case of the rectangular area transfer. The shown arithmetic operation system also includes a SRC register 107 couped to the shifter 105 for storing the transfer source data in the case of the rectangular area transfer, a DST register 108 coupled to the I/O controller 103 so as to receive and store a transfer destination data in the case of the rectangular area transfer, and a MSK register 109 coupled to the mask generator 106 for storing the mask generated by the mask generator 106. An arithmetic operation apparatus 110 are coupled to the three registers 107, 108 and 109, and controlled by a carry control indication register 111, which outputs bit information indicating in the arithmetic operation apparatus 110 a bit position(s) at which a carry is not executed. A result of arithmetic operation outputted from the arithmetic operation apparatus 110 is stored in a DOUT register 112, which is also coupled to the I/O controller 103. A bus 113 is used for data exchange between the shown apparatus and an external device, and is coupled to the catty control indication register 111 through a data bus 114, so that carry control information can be written to the carry control indication register 111 from an external device.

The sequencer 102 outputs control signals 121, 122 and 123 to the read/write controller 104, the shifter 105 and the mask generator 106, respectively. In addition, the sequencer 102 also outputs read/write signals 124, 125, 126, 127 and 128 to the display memory 101, the MSK register 109, the DST register 108, the SRC register 107, and DOUT register 112, respectively. In addition, an arithmetic operation mode signal OPMOD 129 is supplied to the arithmetic operation apparatus 110.

In image processings, a transfer or copy of a rectangular area defined by a bit boundary of an image in the display memory is frequently performed. In the case of the rectangular area transfer, it is an ordinary practice to read data of a transfer source image area and data of a transfer destination image area, to execute arithmetic operation between the read data of the transfer source image area and the read data of the transfer destination image area, and then, to write the result of operation to the transfer destination image area. At this time, the processing is executed word by word, but, at a left end and a right end of the rectangular region, only a portion of one word in the transfer destination area is frequently rewritten. For this purpose, the mask is used. Accordingly, the transfer source data, the transfer destination data and the mask data are required to be supplied to the arithmetic operation apparatus.

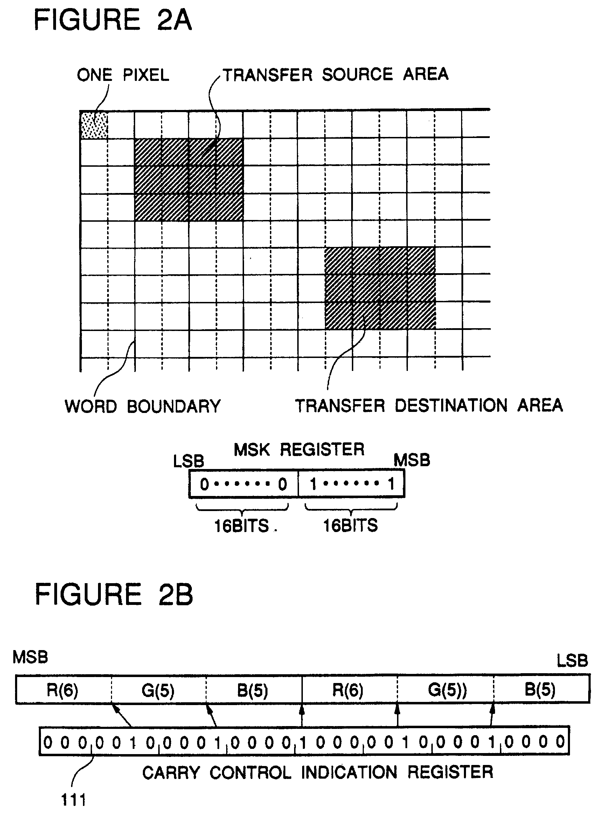

An example of the copy processing is shown in Figure 2A, which illustrates images on the image memory when the transfer of a rectangular area in the image on the image memory is executed, and a content of the MSK register 105. In Figure 2A, 16 bits are allocated for each one pixel in order to indicate a color of the pixel, and information for a pair of adjacent pixels are packed as one word which is composed of 32 bits. A left side pixel of the pair of adjacent pixels is allocated with a low place 16 bits of the 32 bits, and a right side pixel of the pair of adjacent pixels is allocated with a high place 16 bits of the 32 bits. In addition, the transfer is executed from a word located at an upper left corner of the rectangular area in a rightward direction and then in a downward direction.

First, one word of an upper left corner of the transfer source area is read out. In the shown example, a starting point of the transfer source area is located adjacent to a word boundary, but an upper left corner of the transfer destination area does not start from a word boundary. Therefore, the transfer source data is shifted to a high place by the amount corresponding to one pixel, namely, by 16 bits. Thereafter, an arithmetic operation is executed between the shifted transfer source data and one word of data including a left end of the transfer destination area image. In addition, it is necessary to maintain, without modification, the original data for a left side pixel which is included in the one word of data including the left end of the transfer destination area image but which is not included in the transfer destination area image.

Therefore, the original data of the low place 16 bits is written back without modification. For this purpose, a portion to be rewritten on the basis of the arithmetic operation result is designated by the mask. In the shown example, only a portion of "1" in the mask is rewritten, and a portion of "0" in the mask maintains the original data. In this case, the mask stored in the MSK register 109 shown in Figure 2A is composed of the low place 16 bits of all "0" and the high place 16 bits of all "1". Accordingly, the content of the MSK register 109 depends upon a position of the transfer destination area.

Now, one word operation processing in the case of the rectangular area transfer in the shown embodiment will be described with reference to Figure 1 and Figure 2B. Figure 2B shows correspondence between the content of the carry control indication register 111 and boundaries of fields. In this embodiment, the arithmetic operation apparatus 110 has a bit length of 32 bits, and therefore, the bit length of the carry control indication register 111 is 31 bits.

At an initial stage of the processing, in the carry control indication register 111, "1" is written at positions at which a carry is stopped in the arithmetic operation executed by using the arithmetic operation apparatus 110, and "0" is written at the remaining positions. As shown in Figure 2B, the data for the two pixels is packed in one word, and each one pixel is given by three divided fields bits, namely, 6 bits for red, 5 bits for green and 5 bits for blue, so that the arithmetic operation is executed in units of fields. In this case, the carry control indication register 111 is set with a value of "$2109210_H$" where H indicates hexadecimal notation.

The transfer source data and the transfer destination data are read from the display memory 101 through the I/O controller 103. The transfer source data is shifted by the shifter 105, and then, stored in the SRC register 107. On the other hand, the transfer destination data is stored in the DST register 108 without modification. In addition, the mask data is generated by the mask generator 109 in accordance with the control signal 123, and then stored in the MSK register 109.

If the operation mode signal OPMOD 129 is "0", the arithmetic operation apparatus 110 is controlled to sum the value of the SRC register 107 and the content of the DST register 108. On the other hand, if the operation mode signal OPMOD 129 is "1", the arithmetic operation apparatus 110 is controlled to subtract the content of the DST register 108.from the value of the SRC register 107. At this time, propagation of the carry is stopped within the 32 bits of the arithmetic operation apparatus 110 at positions corresponding to "1" in the carry control indication register 111. In addition, a portion of the operation result corresponding to "1"s in the MSK register 109 and a portion of the original data stored in the DSK register 108 corresponding to "0"s in the MSK register 109 are outputted to the DOUT register 112. A content of the DOUT register 112 is written to the display memory 101 through the I/O controller 103.

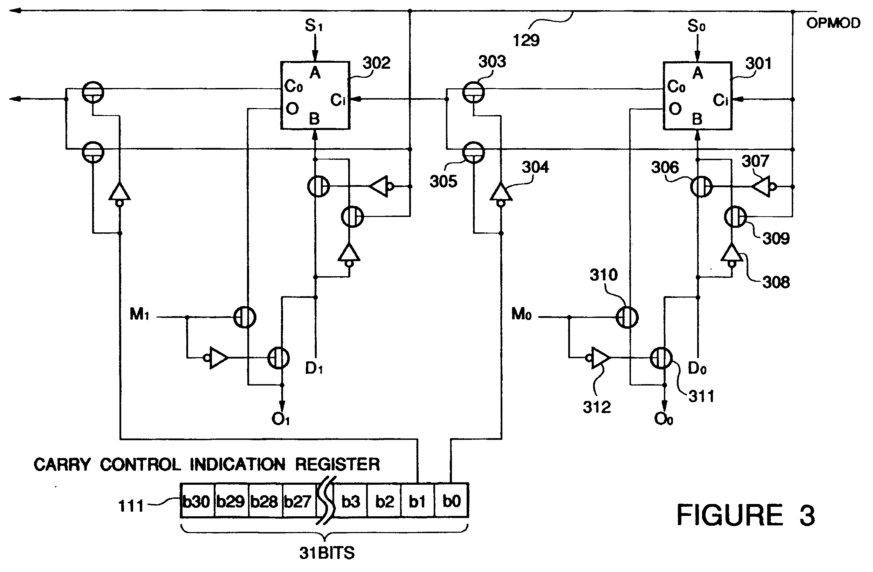

Detail of the arithmetic operation executed in the arithmetic operation apparatus 110 will be explained with reference to Figure 3, which shows an example of the circuit for controlling the carry of the arithmetic operation on the basis of the value of the carry control indication register 111. For simplification of the drawing, only a portion for a low place two bits in the arithmetic operation apparatus 110 is shown in Figure 3.

The shown apparatus includes adders 301 and 302 provided for each bit Each of the bit adders 301 and 302 includes data inputs A and B for receiving a pair of bits to be subjected to the arithmetic operation. Each of the bit adders 301 and 302 also includes a carry input Ci, a carry output Co, and an operation result output O. Here, the 32-bit data outputted from the SRC register 107 to the arithmetic operation apparatus 110 is expressed by $S_0$ to $S_{31}$, and the 32-bit data outputted from the DST register 108 to the arithmetic operation apparatus 110 is expressed by $D_0$ to $D_{31}$. The 32-bit data outputted from the MSK register 109 to the arithmetic operation apparatus 110 is expressed by $M_0$ to $M_{31}$. Only least significant two bits of these 32-bit data are shown in Figure 3.

In addition, a gate indicated by each circle sign means a transfer gate in which, when a signal applied to an input indicated by a T-shaped portion is "0", data cannot transfer through the transfer gate, and when the signal applied to the T-shaped control input is "1", data can transfer through the transfer gate. Therefore, a combination of two transfer gates makes it possible to select either one of two data flows.

In brief, since the connection pattern of the transfer gates and the bit adder is repeated from the least significant bit to the most significant bit, only the connection pattern of the bit adder 301 and the associated transfer gates will be explained. The carry output Co of the least significant bit adder 301 is connected to the carry input Ci of the next less significant bit adder 302 through a transfer gate 303 which has a control input connected through an inverter 304 to a corresponding bit, namely the least significant bit "$b_0$" of the carry control indication register 111. The carry input Ci of the next less significant bit adder 302 is connected to receive the operation mode signal 129 through a transfer gate 305 which has a control input connected to the least significant bit "$b_0$" of the carry

control indication register 111. Therefore, if the least significant bit "$b_0$" of the carry control indication register 111 is "1", the transfer gate 303 is closed and the transfer gate 305 is opened, and when the least significant bit "$b_0$" is "0", the transfer gate 303 is opened and the transfer gate 305 is closed.

Do is supplied to the input Bin of the adder 301 through a transfer gate 306, which is controlled by the operation mode signal 129 through an inverter 307. Do is supplied to the input Bin of the adder 301 through an inverter 308 and a transfer gate 309 which is controlled directly by the operation mode signal 129. On the other hand, the data output O of the adder 301 is outputted to a least significant bit output $O_0$ through a transfer gate 310, which is controlled by the least significant bit $M_0$ of the mask data. In addition, Do is connected to the least significant bit output $O_0$ through a transfer gate 311, which is controlled by the least significant bit $M_0$ of the mask data through an inverter 312.

Now, explanation will be made about the case of the operation mode signal 129 of "0", namely, the case of addition.

$S_0$ is applied to the input A of the bit adder 301, and $D_0$ is applied to the input B of the bit adder 301 without modification, since the operation mode signal 129 is "0". In addition, the carry input of the bit adder 301 is applied with the operation mode signal 129 of "0".

In this condition, if a "0"th bit $M_0$ of the mask is "1", the result of the operation of the bit adder 301 is outputted from an output $O_0$. If the "0"th bit $M_0$ of the mask is "0", $D_0$ is outputted from the output $O_0$ as it is. The carry generated in the operation executed in a bit-by-bit manner is supplied without modification to the carry input Ci of the next bit adder 302, if a "0"th bit "$b_0$" of the carry control indication register 111 is "0". If the "0"th bit "$b_0$" of the carry control indication register 111 is "1", the value "0" of the operation mode signal 129 is applied to the carry input Ci of the next bit adder 302, so that even if the carry outputted from the bit adder 301 is "1", the carry is inputted to the next bit adder 302.

Next, explanation will be made about the case of the operation mode signal 129 of "1", namely, the case of subtraction.

The subtraction is realized by adding a two's compliment of a subtrahend to a minuend. Specifically, the subtrahend is inverted bit by bit (one's compliment) and added with "1" (two's compliment).

In the least significant bit adder 301, $S_0$ is applied to the input A, and on the other hand, the input B is supplied with an inverted value of $D_0$ since the operation mode signal 129 is "1". In addition, since "1" is added to the least significant bit as mentioned above in the case of the subtraction, the carry input of the least significant bit adder 301 is supplied with the operation mode signal 129 of "1".

In this condition, if the "0"th bit $M_0$ of the mask is "1", the result of the operation of the bit adder 301 is outputted from an output $0_0$. If the "0"th bit $M_0$ of the mask is "0", $D_0$ is outputted from the output $O_0$ as it is. The carry generated in the operation executed in a bit-by-bit manner is supplied without modification to the carry input Ci of the next bit adder 302, if a "0"th bit "$b_0$" of the carry control indication register 111 is "0". If the "0"th bit "$b_0$" of the carry control indication register 111 is "1", the value "1" of the operation mode signal 129 is applied to the carry input Ci of the next bit adder 302, so that the subtraction is performed by regarding the next bit adder 302 as the least significant bit adder.

It would be readily understood that if the above mentioned processing is performed on all inter-bit carry, a carry propagation can be blocked within the arithmetic operation apparatus 110 at arbitrary positions in accordance with the value set in the carry control indication register.

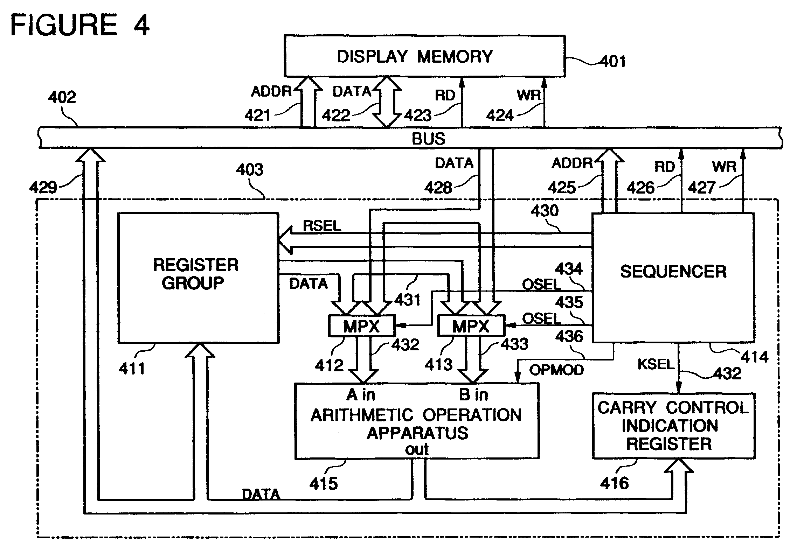

Referring to Figure 4, there is shown a block diagram of a second embodiment of the arithmetic operation system in accordance with the present invention.

The shown system includes an display memory 401 coupled to a bus 402, and an arithmetic operation system 403 also coupled to the bus 402. The arithmetic operation system 403 includes a group of registers 411, a pair of multiplexors 412 and 413 each receiving data outputted from the register group 411 and data outputted from the bus 402 for selecting one of the two received data, a sequencer 414, an arithmetic operation apparatus 415, and a carry control indication register 416 which outputs bit information indicating a bit position(s) at which a carry propagation is stopped or blocked in the arithmetic operation apparatus 415.

The display memory 401 receives an address 421, data 422, a read signal 423 and a write signal 424 through the bus 402. The sequencer 414 outputs an address 425, a read signal 426 and a write signal 427 to the bus 402. In addition, data 428 is supplied from the bus 402 to the arithmetic operation system 403, and data 429 is outputted from the arithmetic operation system 403 to the bus 402.

Furthermore, the sequencer 414 outputs a register selection signal RSEL 430 to the register group 411, so that data 431 read out from a selected register is supplied to the multiplexor 412 or 413. Data 432 outputted from the multiplexor 412 is applied to an input $A_{in}$ of the arithmetic operation apparatus 415, and data 433 outputted from the multiplexor 413 is applied to an input $B_{in}$ of the arithmetic operation apparatus 415.

The sequencer 414 outputs operand selection signals OSEL 434 and 435 to the multiplexors 412 and 413, respectively, and an operation mode signal OPMOD 436 to the arithmetic operation apparatus 415. In addition, the sequencer 414 outputs a read/write signal KSEL 437 to the carry control indication register 416. An output of the arithmetic operation apparatus 415 is coupled to the register group 411 and the carry control indication register 416, and also outputted to the bus 402 as the output data 429 of the arithmetic operation system 403.

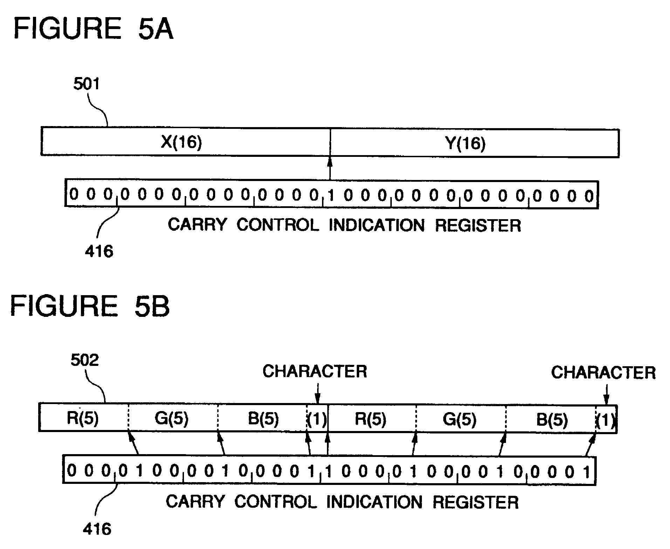

Turning to Figures 5A and 5B, examples of operands stored in registers of the register group 411 and corresponding values to be stored in the carry control indication register are exemplified. Figure 5A illustrates a content of a register 501 storing an X-Y coordinate of a graphic pattern to be depicted, and Figure 5B shows a content of a register 502 storing color information of two pixels.

In this embodiment, the value of each of the X-coordinate and the Y-coordinate is expressed by 16 bits, and the X-coordinate and the Y-coordinate are packed in one 32-bit register. For example, when a straight line is depicted, each time one pixel is depicted, either one or both of the X-coordinate and the Y-coordinate are moved by one unit in accordance with an inclination of the straight line to be depicted. In this embodiment, both of the X-coordinate and the Y-coordinate are simultaneously incremented in one arithmetic operation.

As shown in Figure 5B, 16 bits in the display memory are allocated to one pixel on an image plane. In addition, 15 bits of the 16 bits are allocated to a color graphic image, and one of the 16 bits is used for a character image. The 15 bits for the color graphic image are divided into three fields of 5 bits for red, green and blue, respectively. In a pixel having "1" written to the character bit, a color designated for a character is displayed to overlie the graphic image. At the time of arithmetic operation, information for two pixels are packed in one word of 32 bits.

The embodiment shown in Figure 4 utilizes the arithmetic operation system in accordance with the present invention, in order to execute the operation for the X-Y coordinate data and the operation of the pixel data by commonly using a single arithmetic operation apparatus.

Now, a data processing by the arithmetic operation apparatus 415 will be explained with reference to Figures 4, 5A and 5B.

First, an initial value is set to the carry control indication register 416. This writing of the initial value to the carry control indication register 416 is performed by supplying the initial value to the input $A_{in}$ of the arithmetic operation apparatus 415 and causing the initial value to be passed through the arithmetic operation apparatus 415 without being subjected to any arithmetic or logic operation.

In the case that an arithmetic operation is performed for the value of the register 501 shown in Figure 5A, "8000$_H$" is set into the carry control indication register 416. A result of operation is written back to the register 501.

On the other hand, in the case that an arithmetic operation is performed for the value of the register 502 shown in Figure 5B, "4218421$_H$" is set into the catty control indication register 416. A result of operation is supplied to the display memory 401 or a register within the register group 411.

In order to ensure that the above mentioned data having different data structures can be processed by the same arithmetic operation apparatus, each time the data structure of the operand changes, the value stored in the carry control indication register 416 is rewritten, and thereafter, the arithmetic operation is executed.

The arithmetic operation executed in the arithmetic operation apparatus 415 can be divided into the case using the data stored in the register group and the case of using the image data supplied from the display memory without modification. For this purpose, the input supplied to the arithmetic operation apparatus 415 can be selected, by the multiplexors 412 and 413, from the data read from the display memory 401 through the bus 402 and the data read from a register included in the register group 411.

A first operand for the arithmetic operation apparatus 415 is supplied to the input $A_{in}$ from the multiplexor 412. When the operand selection signal 434 supplied from the sequencer 414 is "0", the data 431 read from the register group 411 is supplied through the multiplexor 412 and an internal bus 432 to the input $A_{in}$ of the arithmetic operation apparatus 415. If the operand selection signal 434 is "1", the data 428 read from the bus 402 is supplied through the multiplexor 412 and the internal bus data 432 to the input $A_{in}$ of the arithmetic operation apparatus 415. A second operand for the arithmetic operation apparatus 415 is similarly selected by the multiplexor 413 controlled by the operand selection signal 435, and the selected operand is supplied through an internal bus 433 to the input $B_{in}$ of the arithmetic operation apparatus 415.

If the operands are inputted, the carry propagation within the arithmetic operation apparatus 415 is controlled on the basis of the content of the carry control indication register 416, similarly to the first embodiment, particularly to the circuit shown in Figure 3, and an addition or subtraction is executed on the basis of the value of the operation mode signal 436. A result of operation is outputted to the data bus 429, and then, is written through bus 402 to the display memory 401 or a register in the register group 411.

As seen from the above, the first embodiment is such that the value initially set in the carry control indication register is referred to in a series of processings. The second embodiment is such that since the same arithmetic operation apparatus is used in a plurality of different types of processings, the value of the carry control indication register is dynamically changed or modified in the course of execution of a series of different types of processings. In this point, the second embodiment is different from the first embodiment.

As seen from the above description of the embodiments of the arithmetic operation system in accordance with the present invention, the arithmetic operation apparatus can be divided into an arbitrary number of fields partitioned at arbitrary bit positions, by changing the value of the register that indicates positions at which a carry is inhibited in the arithmetic operation. Therefore, an independent result of operation can be obtained from each of the partitioned fields.

In the first embodiment, the value initially set in the carry control indication register is referred to in a series of processings. The number of fields established in one word and the size of each of the fields established can be freely set in a software manner. Accordingly, the first embodiment can be used in various applications.

In particular, considering the case that an LSI is manufactured, if the arithmetic operation system can be prepared for three kinds of applications different from each other in the divided field structure, the conventional method of dividing the fields at the fixed positions requires to develop three kinds of LSIs. However, the arithmetic operation system in accordance with the present invention can make it possible to comply with all the applications.by only one kind of LSI. Therefore, the steps for development, manufacturing and checking for the LSI can be reduced to one-third.

The second embodiment can make it possible to use the same arithmetic operation apparatus commonly for different processings, by dynamically changing the value of the carry control indication register in the course of execution of a series of different types of processings. Therefore, the second embodiment is suitable to a situation in which a limited resource must be used for multiple purposes.

The invention has thus been shown and described with reference to the specific embodiments. However, it should be noted that the present invention is in no way limited to the details of the illustrated structures but changes and modifications may be made within the scope of the appended claims.

## Claims

1. An arithmetic operation system which includes a plurality of cascaded arithmetic units each receiving operation data and an input carry and outputting an operation result data and an output carry, comprising a carry control indication register for storing carry control information for each of said plurality of cascaded arithmetic units, and a plurality of carry controllers each provided for a corresponding one of said plurality of cascaded arithmetic units, said carry controller receiving corresponding carry control information from said carry control indication register and operating to modify an output carry outputted from the corresponding arithmetic unit so as to supply the modified carry to an adjacent more significant bit arithmetic unit.

2. An arithmetic operation system claimed in Claim 1 wherein each of said arithmetic units has its carry output connected to the carry input of an adjacent more significant bit arithmetic unit through a first transfer gate which is controlled by a corresponding bit of said carry control information stored in said carry control indication register, said carry input of an adjacent more significant bit arithmetic unit being also connected to receive a fixed level through a second transfer gate which is also controlled by said corresponding bit of said carry control information in such a manner that when said corresponding bit of said carry control information indicates allowance of a carry propagation, said first transfer gate is opened and said second transfer gate is closed, and when said corresponding bit of said carry control information indicates inhibit of a carry propagation, said first transfer gate is closed and said second transfer gate is opened.

FIGURE 1

# FIGURE 2A

ONE PIXEL      TRANSFER SOURCE AREA

WORD BOUNDARY      TRANSFER DESTINATION AREA

MSK REGISTER

LSB                                MSB

| 0 · · · · · · 0 | 1 · · · · · · 1 |

16BITS.          16BITS

# FIGURE 2B

MSB                                                                    LSB

| R(6) | G(5) | B(5) | R(6) | G(5)) | B(5) |

| 0 0 0 0 0 1 0 0 0 0 1 0 0 0 0 1 0 0 0 0 0 1 0 0 0 0 1 0 0 0 0 |

CARRY CONTROL INDICATION REGISTER

111

CARRY CONTROL INDICATION REGISTER

| b30 | b29 | b28 | b27 | | b3 | b2 | b1 | b0 |

111

31BITS

FIGURE 3

EP 0 464 601 A2

# FIGURE 4

EP 0 464 601 A2

# FIGURE 5A

501

| X(16) | Y(16) |
|-------|-------|

| 0 0 0 0 0 0 0 0 0 0 0 0 0 0 0 1 0 0 0 0 0 0 0 0 0 0 0 0 0 0 0 0 |

CARRY CONTROL INDICATION REGISTER

416

# FIGURE 5B

502

CHARACTER            CHARACTER

| R(5) | G(5) | B(5) | (1) | R(5) | G(5) | B(5) | (1) |

| 0 0 0 0 1 0 0 0 0 1 0 0 0 0 1 1 0 0 0 0 1 0 0 0 0 1 0 0 0 0 1 |

CARRY CONTROL INDICATION REGISTER

416

EP 0 464 601 A2